# FASCICULE DE BREVET EUROPEEN

(11) **EP 3 535 183 B1**
(45) Date de publication et mention de la délivrance du brevet: **17.03.2021**
(21) Numéro de dépôt: 17803809.7
(22) Date de dépôt: 02.11.2017
(51) Int. Cl.: H02K 7/14, B64C 9/22

(54) **AILE D'AÉRONEF COMPRENANT UN VOLET MOBILE DE BORD D'ATTAQUE ENTRAÎNÉ PAR UN MOTEUR ÉLECTRIQUE LINÉAIRE**
FLUGZEUGFLÜGEL MIT EINER BEWEGLICHEN, VON EINEM LINEARELEKTROMOTOR ANGETRIEBENEN VORDERKANTENKLAPPE
AIRCRAFT WING COMPRISING A MOBILE LEADING EDGE FLAP DRIVEN BY A LINEAR ELECTRIC MOTOR

(30) Priorité: 04.11.2016 BE 201605822
(43) Date de publication de la demande: 11.09.2019
(73) Titulaire: Sonaca S.A., 6041 Gosselies (BE)
(72) Inventeur: DEBAISIEUX, Stéphane, 1495 Sart-Dames-Avelines (BE); SCIARRABONE, Steve, 6540 Lobbes (BE)
(74) Mandataire: Brevalex
(86) Numéro de dépôt international: PCT/EP2017/078002
(87) Numéro de publication internationale: WO 2018/083144

(56) Documents cités:
- EP-A1- 2 116 467
- EP-A1- 2 505 493
- EP-A1- 3 029 819
- DE-A1-102014 101 276
- KR-A- 20080 035 538
- US-A- 4 399 970
- US-B2- 6 776 580

## Description

### DOMAINE TECHNIQUE

La présente invention se rapporte au domaine des ailes d'aéronef, du type comprenant un corps central fixe d'aile portant un ou plusieurs volets mobiles de bord d'attaque, également dénommés « *Slats* ».

Il est noté que l'invention s'applique à tous les types d'aéronef, comme une aile volante, un avion à moteur en queue de fuselage, un avion supersonique, etc.

### ETAT DE LA TECHNIQUE ANTERIEURE

Sur les aéronefs, chacune des deux ailes de la voilure est généralement équipée de volets mobiles hypersustentateurs, montés au bord d'attaque et au bord de fuite de l'aile.

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. De plus, toujours de façon connue de l'homme du métier, le déplacement de chaque volet s'effectue à l'aide de moyens logés essentiellement dans une partie avant ou arrière d'un corps central fixe d'aile, tel que cela est notamment connu du document EP 0 818 387. Ces moyens permettent de déplacer chaque volet mobile de bord d'attaque selon une trajectoire habituellement en arc de cercle par rapport au corps central fixe d'aile, entre une position rentrée dans laquelle le volet épouse sensiblement le corps fixe, et une position déployée dans laquelle ce volet est déplacé vers l'avant.

Plus précisément, comme cela ressort du document EP 0 818 387, chaque volet mobile de bord d'attaque est équipé d'un dispositif assurant sa mise en mouvement, ce dispositif comprenant un premier et un second rails d'entraînement espacés selon une direction d'envergure de l'aile, et comprenant chacun une extrémité avant raccordée au volet mobile. Ces deux rails d'entraînement sont couplés à des moyens de mise en mouvement, par exemple du type arbre de commande portant des pignons entraînés en rotation et coopérant respectivement avec des crémaillères prévues sur les rails d'entraînement EP2116467 décrit une configuration similaire et concerne une aile d'aéronef comprenant un corps central d'aile, ainsi qu'un volet mobile de bord d'attaque destiné à être déplacé selon un axe de rotation de volet, cette aile comprenant un dispositif de mise en mouvement du volet mobile, équipé de deux rails d'entraînement, chacun comprenant une extrémité avant raccordée au volet mobile. Le dispositif de mise en mouvement comprend un rail suiveur agencé entre les deux rails d'entraînement, et destiné à suivre le déplacement du volet auquel il est raccordé en un point de raccordement de son extrémité avant. De plus, le dispositif de mise en mouvement comprend des moyens de guidage du rail suiveur, rapportés sur le corps et conçus de manière à contraindre ce rail en déplacement, selon une trajectoire en arc de cercle centrée sur l'axe de rotation.

Bien que cette configuration soit très répandue sur les ailes d'aéronef, la conception proposée reste perfectible, notamment en ce qui concerne l'encombrement du dispositif de mise en mouvement, mais également sa masse, sa fiabilité ainsi que sa précision.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une aile d'aéronef selon les caractéristiques de la revendication 1.

L'invention réside ainsi dans l'intégration astucieuse et innovante d'un moteur électrique linéaire au sein de l'aile, afin d'assurer la mise en mouvement du volet mobile de bord d'attaque. La mise en mouvement du/des rails d'entrainement s'effectue ainsi de manière directe, grâce à l'implantation judicieuse de la voie magnétique sur ce/ces mêmes rails d'entrainement à caractère mobile. Cela permet de réduire la masse et l'encombrement du dispositif de mise en mouvement, tout en diminuant également les contraintes géométriques d'implantation de ce dispositif ainsi que les besoins en maintenance. De plus, la suppression d'éléments de transmission mécanique permet de réduire les nuisances acoustiques et renforce la fiabilité et la durée de vie du dispositif de mise en mouvement, qui offre par ailleurs une excellente précision.

En outre, l'invention offre la possibilité d'un contrôle électronique qui procure une souplesse de fonctionnement additionnelle par rapport aux réalisations de l'art antérieur. En particulier, un contrôle peut être effectué en dynamique lors des phases de vol de décollage et d'atterrissage, et éventuellement en phase de croisière, en association avec des capteurs et un système de pilotage de la qualité de l'écoulement aérodynamique autour des surfaces portantes. Il peut également être contrôlé la vitesse de mise en mouvement des volets, avec pour conséquence positive un éventuel gain de performance aérodynamique. Egalement, l'intégration de la fonction d'identification de la position du/des rails dans le système électromagnétique permet en particulier de détecter des éventuels cas de blocage. A cet égard, il est noté que ce contrôle électronique permet également de supprimer les systèmes existants de contrôle et de correction de décalage (de l'anglais « *skewsensor* »), ce qui participe à la réduction de la masse globale du dispositif de mise en mouvement.

Enfin, il est précisé que la conception proposée s'adapte parfaitement aux solutions existantes, qui peuvent être modifiées en conséquence pour bénéficier de l'ensemble des avantages offerts par l'invention.

Enfin, l'invention a également pour objet un aéronef comprenant au moins une aile telle que décrite ci-dessus, cette même aile étant préférentiellement équipée de plusieurs volets mobiles de bord d'attaque.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef;
- la figure 2 représente une vue schématique et partielle en coupe d'une aile d'aéronef selon la présente invention, munie d'un volet mobile de bord d'attaque ;
- la figure 3 représente une vue partielle en perspective du volet mobile de bord d'attaque montré sur la figure 2 ;
- la figure 4 représente une vue en coupe prise le long de la ligne IV-IV de la figure 3 ; et
- la figure 5 représente une vue en coupe prise le long de la ligne V-V de la figure 3.

### EXPOSÉ DÉTAILLÉ DE MODES DE RÉALISATION PRÉFÉRÉS

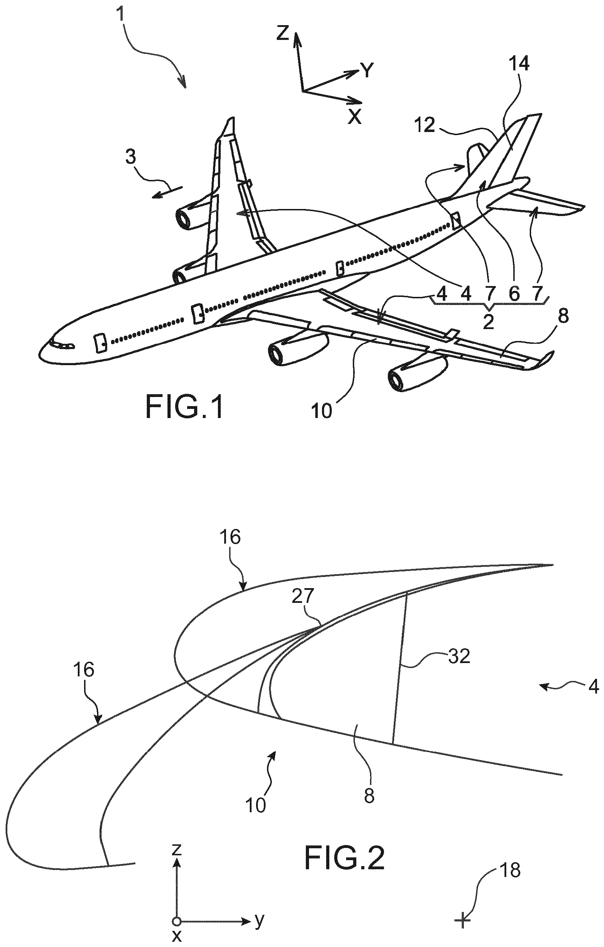

En référence tout d'abord à la figure 1, il est représenté un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3.

Parmi les éléments de voilure de l'aéronef 1, il est prévu deux ailes principales, dites ailes 4, une dérive verticale 6, ainsi que deux empennages horizontaux 7 situés à l'arrière de cet aéronef.

En ce qui concerne les ailes 4, comme évoqué ci-dessus, celles-ci comprennent chacune un corps central fixe d'aile 8, également dénommé portion centrale principale, ce corps constituant quasiment l'intégralité de l'aile, et étant situé en arrière d'un bord d'attaque 10. Dans toute la description qui va suivre, par convention, X correspond à la direction longitudinale de bord d'attaque ou encore direction d'envergure, Y correspond la direction orientée transversalement par rapport au bord d'attaque 10, et la direction Z correspond à la direction verticale, ces trois directions étant orthogonales entre elles.

Comme le montre schématiquement la figure 2, c'est le bord d'attaque 10 de chacune des deux ailes 4 qui peut être équipé d'au moins un volet mobile de bord d'attaque 16, dit « *Slat* ». Chacun de ces volets 16 est destiné à être relié au corps 8 par des moyens qui seront détaillés ci-après. Sur cette figure 2, il est montré que le volet mobile de bord d'attaque 16 (représenté schématiquement) peut occuper une position rétractée/rentrée dans laquelle il affleure la partie avant du corps central fixe 8 de l'aile 4. Dans un tel cas, le volet mobile 16 se trouve dans sa position la plus arrière. De plus, le volet mobile 16 peut occuper une position entièrement déployée où il est à distance vers l'avant du corps central fixe 8, cette position entièrement déployée étant adoptée en particulier durant les phases de décollage et d'atterrissage afin d'augmenter la portance à faible ou moyenne vitesse. Ce volet 16 est bien entendu conçu pour être déplacé entre ces deux positions extrêmes, par exemple de manière à lui faire adopter une position intermédiaire de décollage, connue de l'homme du métier.

A titre indicatif, le volet mobile 16 s'étend par exemple sur sensiblement toute la longueur de l'aile 4 concernée, bien entendu selon la direction d'envergure de cette aile 4, ou bien uniquement sur une portion seulement de cette aile, comme cela est le plus courant sur les aéronefs.

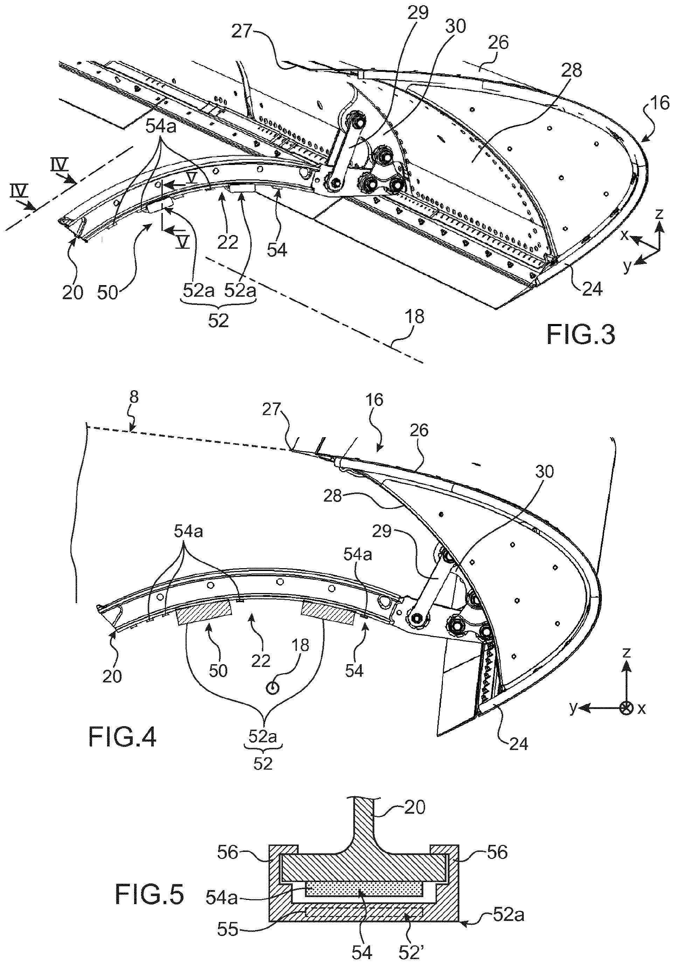

Comme visible sur les figures 3 et 4, le volet 16 comporte un revêtement aérodynamique définissant une portion intrados 24 ainsi qu'une portion extrados 26, cette dernière se terminant par un bord de fuite 27 du volet. De plus, il est fermé vers l'arrière par un revêtement de fermeture 28, destiné à épouser le corps fixe d'aile 8 lorsqu'il occupe la position rétractée.

Toujours en référence aux figures 3 et 4, l'aile comporte un dispositif de mise en mouvement du volet mobile de bord d'attaque 16, ce dispositif 50 permettant de faire pivoter ce dernier par rapport au corps 8, selon un axe de rotation 18, entre la position entièrement déployée et la position rétractée.

Le dispositif de mise en mouvement comprend tout d'abord au moins un rail d'entraînement 20 agencé dans un plan transversal du volet. Dans le cas préféré où il est prévu plusieurs rails 20, ceux-ci sont alors espacés les uns des autres selon la direction d'envergure X.

Chaque rail d'entraînement 20 présente un caractère mobile, puisqu'il est destiné à être mis en rotation autour de l'axe 18, comme cela sera détaillé ci-après. Il présente une forme générale courbe ou en arc de cercle, connue de l'homme du métier et centrée sur l'axe de rotation 18.

L'extrémité avant de chaque rail d'entraînement 20 est raccordée au volet 16 par une ferrure de volet 30 faisant saillie vers l'arrière à partir du revêtement de fermeture 28, une bielle additionnelle 29 étant agencée entre cette même ferrure 30 et un point plus arrière de l'extrémité avant du rail 20.

L'une des particularités de l'invention réside dans les moyens de mise en mouvement du rail 20, qui sont réalisés par un moteur électrique linéaire 22 entrainant directement le rail.

Le moteur électrique linéaire 22 fait donc partie intégrante du dispositif de mise en mouvement 50, en comprenant un ensemble primaire 52 équipé d'au moins deux chariots fixes 52a comprenant des bobines alimentées en courant électrique. Les chariots, ici au nombre de deux, sont solidaires du corps central fixe de l'aile, par exemple rapportés sur un longeron avant de ce corps central en forme de caisson, référencé 32 sur la figure 2.

De plus, le moteur 22 comporte un ensemble secondaire mobile 54 comprenant une voie magnétique agencée sur le rail d'entraînement 20. Les aimants permanents 54a de cette voie magnétique sont ainsi espacés les uns des autres le long du rail 20 sur lequel ils sont fixés. Par conséquent, par opposition aux réalisations conventionnelles des moteurs linéaires, c'est l'ensemble secondaire 54 comportant la voie magnétique qui est mobile, tandis que l'ensemble primaire 52 comprenant les chariots reste fixe sur le corps central de l'aile. Comme cela est visible sur la figure 5 en coupe, les aimants permanents 54a sont agencés en regard de la partie 52' des chariots fixes qui comprend les bobines 55.

De plus, outre la mise en mouvement des rails assurée par les chariots équipés de bobines, ces mêmes chariots 52a servent de guidage lors de la mise en rotation des rails 20 avec lesquels ces chariots coopèrent. A titre d'exemple, chaque chariot 52a peut présenter des rebords 56 conformés pour recevoir et guider les extrémités latérales de la semelle du rail.

Il est noté que plusieurs rails d'entrainement 20 peuvent être équipés d'un tel moteur linéaire. De plus, même si une représentation à deux chariots 52a a été décrite, il est entendu qu'un seul chariot 52a muni de plusieurs bobines serait suffisant pour assurer l'entraînement. A l'inverse, un nombre supérieur de chariots 52a pourrait être prévu en association avec chaque rail, sans sortir du cadre de l'invention. Il pourrait aussi être prévu un chariot fixe assurant l'actuation et le guidage, et un second chariot fixe n'assurant que la fonction de guidage. Selon encore une autre alternative, il pourrait être prévu un chariot fixe assurant exclusivement l'actuation, combiné à un ensemble de galets conventionnel assurant le guidage des différentes surfaces du rail.

Il est également noté que le maintien du dispositif aux différentes positions déployées et en position rétractée est par exemple assurée soit par le dispositif 50 lui-même, soit par des dispositifs additionnels à commande mécanique, électromécanique, électronique, magnétique, électromagnétique, etc.

Bien entendu, diverses modifications peuvent être apportées par l'homme du métier à l'invention qui vient d'être décrite, uniquement à titre d'exemples non limitatifs.

## Revendications

1. Aile d'aéronef (4) comprenant un corps central fixe d'aile (8), ainsi qu'au moins un volet mobile de bord d'attaque (16) destiné à être déplacé relativement audit corps central fixe entre une position déployée et une position rentrée, l'aile comprenant un dispositif (50) de mise en mouvement du volet mobile de bord d'attaque, ledit dispositif (50) étant équipé d'au moins un rail d'entraînement mobile (20) comportant une extrémité avant raccordée au volet mobile,
**caractérisée en ce que** ledit dispositif de mise en mouvement (50) comprend un moteur électrique linéaire (22) comportant :
- un ensemble primaire (52) équipé d'au moins deux chariots fixes (52a) espacés l'un de l'autre le long du rail d'entraînement mobile (20), chaque chariot fixe (52a) comprenant des bobines (55), l'ensemble primaire étant solidaire du corps central fixe (8) de l'aile ; et
- un ensemble secondaire mobile (54) comportant une voie magnétique agencée sur le rail d'entraînement (20),
et **en ce que** ledit rail d'entraînement (20) est guidé par chaque chariot fixe (52a).

2. Aéronef (1) comprenant au moins une aile (4) selon la revendication 1.

## Patentansprüche

1. Flugzeugflügel (4), umfassend einen feststehenden mittleren Flügelkörper (8) sowie mindestens eine bewegliche Vorflügelklappe (16), die dazu bestimmt ist, bezüglich des feststehenden mittleren Körpers zwischen einer Einsatzposition und einer zurückgezogenen Position bewegt zu werden, wobei der Flügel eine Vorrichtung (50) umfasst, um die bewegliche Vorflügelklappe in Bewegung zu versetzen, wobei die Vorrichtung (50) mit mindestens einer beweglichen Mitnehmerschiene (20) ausgerüstet ist, die ein mit der beweglichen Klappe verbundenes vorderes Ende aufweist, **dadurch gekennzeichnet, dass** die Inbewegungsversetzungsvorrichtung (50) einen linearen Elektromotor (22) umfasst, der Folgendes aufweist:
- eine Primärbaugruppe (52), die mit mindestens zwei feststehenden Schlitten (52a) ausgerüstet ist, die entlang der beweglichen Mitnehmerschiene (20) voneinander beabstandet sind, wobei jeder feststehende Schlitten (52a) Spulen (55) umfasst, wobei die Primärbaugruppe fest mit dem feststehenden mittleren Körper (8) des Flügels verbunden ist, und
- eine bewegliche Sekundärbaugruppe (54), die eine an der Mitnehmerschiene (20) angeordnete Magnetspur aufweist,
und dass die Mitnehmerschiene (20) mittels jedes feststehenden Schlittens (52a) geführt wird.

2. Flugzeug (1), umfasst mindestens einen Flügel (4) nach Anspruch 1.

## Claims

1. Aircraft wing (4) comprising a fixed central wing body (8), as well as at least one mobile leading edge flap (16) intended to be moved relative to said fixed central body between a deployed deposition and a retracted position, the wing comprising a device (50) for movement of the mobile leading edge flap, said device (50) being equipped with at least one mobile drive rail (20) comprising a front end connected to the mobile flap,
**characterised in that** said movement device (50) comprises a linear electric motor (22) comprising:
- a primary assembly (52) equipped with at least two fixed trucks (52a) spaced apart from each other along the mobile drive rail (20), each fixed truck (52a) comprising coils (55), the primary assembly being rigidly connected to the fixed central body (8) of the wing; and
- a mobile secondary assembly (54) comprising a magnetic pathway arranged on the drive rail (20)
and **in that** said drive rail (20) is guided by each fixed truck (52a).

2. Aircraft (1) comprising at least one wing (4) according to claim 1.
